## Europäisches Patentamt

## European Patent Office

## Office européen des brevets

(11) Publication number: **0 042 262**
**B1**

(12) **EUROPEAN PATENT SPECIFICATION**

(45) Date of publication of patent specification: **05.06.85**

(21) Application number: **81302605.1**

(22) Date of filing: **11.06.81**

(51) Int. Cl.⁴: **F 16 L 59/16,** B 29 C 61/00,
F 16 L 47/00, B 29 C 65/00,
B 29 D 7/00

(54) **Pleated recoverable material.**

(30) Priority: **12.06.80 US 158765**

(43) Date of publication of application:
**23.12.81 Bulletin 81/51**

(45) Publication of the grant of the patent:
**05.06.85 Bulletin 85/23**

(84) Designated Contracting States:
**AT BE CH DE FR IT LI NL SE**

(56) References cited:
**DE-A-2 003 380**
**US-A-3 503 426**

**Patents Abstracts of Japan, vol. 4, no. 147, 16
October 1980, page 73M36**

(73) Proprietor: **N.V. RAYCHEM S.A.**
**Diestsesteenweg 692**
**B-3200 Kessel-lo (BE)**

(72) Inventor: **Diaz, Stephen Hunter**
**27920 Roble Blanco**
**Los Atlos Hills California 94022 (US)**
Inventor: **Cordia, Hans**
**N/A Kerweg 25**
**B-3041, Pellenberg (BE)**

(74) Representative: **Benson, John Everett et al**
**Raychem Limited Intellectual Property Law
Department Swan House 37-39, High Holborn
London WC1 (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to recoverable, preferably heat-recoverable, articles. In particular, the invention relates to articles having pleats which at least partially are absorbed on recovery. The provision of pleats can allow a more satisfactory recovery than is obtained from simple uniform expansion.

Attention is drawn to US—A—3503426 which discloses a seamed tubular plastic jacket for enclosing elbows and the like, the main body of the jacket having circumferential corrugations to facilitate flexing.

Recoverable articles are articles the dimensional configuration of which may be made substantially to change on suitable treatment, and heat-recoverable articles are ones which change on heat treatment. Usually these articles recover, on heating, towards an original shape from which they have previously been deformed, but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in US Patent 2,027,962. As is made clear in US Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

Heat-recoverable articles are typically made from a polymer such as an olefinic polymer, for example polyethylene or ethylene copolymers with propylene, butene, vinyl acetate or ethyl acrylate; polyvinyl chloride or polyvinylidene fluoride; which has been cross-linked, for example by irradiation with high energy electrons or γ-radiation or has been chemically cross-linked.

In the production of heat-recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as an inner tubular member, which, upon heating, weakens and thus allows the elastomeric member to recover.

The use of recoverable articles, for mechanical protection and electrical insulation where appropriate, in covering articles, for example pipes and cable, has been disclosed in, for example, US Patent Nos. 2,027,962 to Currie and 3,297,819 to Wetmore. These articles are designed primarily for covering a single pipe or a butt-junction between two pipes. In US Patent No. 3,455,336 to Ellis there is disclosed a heat-shrinkable sleeve which can be wrapped around an article or two butt-joined articles, which is suitable for use, for example, when no free end of the pipe or pipes is available. In the Ellis patent, there is disclosed a heat-recoverable closure member, usually of sheet form, two opposite edges of which have protuberances along their length which, when the sheet is wrapped around an article to be covered, are in abutting relationship and can be held in such relationship during and after recovery by a fastening means, for example a metal channel. By the use of suitably moulded closure members, and using two or more sets of abutting protuberances, the closure member can be used for covering T or Y junctions on existing pipes and cables. Such mouldings are, however, relatively expensive.

British Patent 1,447,048 discloses a heat-recoverable article that is adapted to cover a conduit junction having at least three arms, which comprises a radially heat-shrinkable tubular member or a member in sheet form of which opposing edge regions can be brought and held together to form a radially heat-shrinkable tubular member, the member having at least one heat-shrinkable aperture with an upstanding wall around its periphery, preferably outwardly extending from the member, the wall being such that on heating, its height and periphery are reduced.

Recoverable articles in the form of tapes, generally heat-recoverable tapes, can be used to seal a branch-off to a main conduit. This is done by wrapping the tape between the main conduit and the branch-off conduit. This is not satisfactory in some instances since it can be difficult to obtain a good seal with certainty, and the wrapping operation is time consuming and craft sensitive. Also the technique of covering joints in electrical or telephone cables with polymeric tape is known. Such polymeric tapes include both pressure-sensitive tapes, such as the common electrical tape, and heat-shrinkable tapes, such as those described in US Patent No. 4,001,065.

Pressure-sensitive tape requires a tight, careful wrapping in order to achieve an adequate seal, while heat-shrinkable tape is less craft-sensitive in that the shrinkage of the tape on heating to its recovery temperature tightens it onto the substrate. When the heat-shrinkable tape is either coated with adhesive, or is self-adhesive at its recovery temperature (as is the tape of US Patent No. 4,001,065), the seal is more easily formed.

Such heat-shrinkable tapes may include those which have integral heating means, especially those which are electrically self-heatable. Articles of this latter type are described in US Patent No. 4,177,446.

However, when the substrate has a "transition", i.e. it is of non-uniform cross-section, such as when pipes of different diameters have been joined or two telephone cables have been spliced together, in which case the splice area is of greater diameter than the cables, a smooth wrapping is much more difficult to obtain. This smooth wrapping has previously been achieved by the use of narrow tape which is thin and either elastomeric or composed of low yield material, e.g. PVC, so that one edge may be stretched with respect to the other. Narrow tape, however, suffers from a number of disadvantages, in particular:

(1) in order to render it extensible, it is necessarily relatively weak,

(2) because of the narrowness there are many lap areas, and the leak paths, which are generally one-half the tape width, are thus short,

(3) for the above reasons, installation is craft-sensitive.

In all these cases, whether branch-offs, transitions in conduits, pipe bends or cable joints, craft-sensitivity, expense and good sealing can be a problem. We have now discovered that these problems can be reduced or overcome by using recoverable materials having pleats which are at least partially absorbed on recovery. The recoverable material will generally be produced by a first uniform expansion, and then a further expansion which produces the pleats. The invention has two main aspects, firstly recoverable pleated sheets which can themselves form conduits or cable coverings, and secondly pleated tapes which can be bound around cables and other substrates.

Thus, in one aspect the present invention provides a recoverable polymeric sheet material for forming a conduit, which has been differentially expanded, the change in extent of expansion across its surface being accommodated by pleats which increase in depth or number in the direction of increasing expansion.

In a second aspect, the invention provides a tape, comprising a recoverable polymeric material in strip form having generally transverse pleats forming the corrugations. The pleats need not be uniformly distributed along the length of the tape, and need not be uniform across the tape; for example a central portion of the tape could be free of pleats.

It is to be understood that the word pleats as used in the specification and claims has a broad meaning including but not limited to folds, or creases which are doubled upon themselves, or which have any particular geometric form; the word is intended to encompass any series of corrugations folds, creases or undulations by which a sheet may be compacted into a smaller area than the surface area of its material.

The first aspect of the present invention in particular provides a recoverable sheet material for providing a sealed branch-off from a main conduit, comprising: a first portion which can define or enclose a branch-off conduit, and a second portion having been expanded differentially and which thus can splay out to form a collar around a hole in the main conduit. Preferably the whole of the sheet is first expanded and the differential expansion of the second portion is superimposed.

The sheet material can be used to join an independent branch-off conduit to a main conduit, or said first portion can itself constitute the branch-off conduit. The invention is particularly useful for larger conduits such as that used for carrying oil or gas.

The invention also provides a method of forming a branch-off, in which the sheet material of the invention is placed on a conduit with the collar around a hole in the conduit, the collar is secured to the conduit, and the sheet material recovered. The collar is secured to the conduit by means of an overlying recoverable wrap-around sleeve which has a hole through which said first portion can pass, or by two adhesive patches or wrap-around or tubular sleeves one either side of the branch-off conduit; where the conduits are large it will generally be necessary to use two patches or sleeves, rather than a single item with a hole. The invention is particularly applicable to T-shaped branch-offs, but is also suitable where the branch-off conduit is not perpendicular to the main conduit. When we use the term "main conduit" we do not indicate that it is necessarily larger than the branch conduit, but merely to differentiate between the conduit which branches off and the conduit from which the branching off occurs.

The sheet material of the invention can be provided as wrap-around closure member, in which case means will generally be required to secure it in the closed configuration. Such means can be adhesive or the provision of a rail and channel closure, such as that described in our US Patent 3,455,336, modifications to this idea are disclosed in British Patent 1,529,351. Alternatively the sheet material can be provided as a tube. In either case some sort of sealant (such as hot-melt adhesive or mastic) will generally be employed when the branch-off is made. It is preferred, none-the-less, that the sheet material be provided plain, a sealant being added by the craftsman on site where required. The alternative is to provide a coating of sealant on the inner surface of the sheet material; this however makes production of the material more expensive. The sheet material of the invention may be held in the closed configuration, and it may be sealed to the main conduit by a pressure-sensitive or heat-activated closure patch, such as that sold by Raychem under the trade mark WPCP.

The method of producing the sheet material in wrap-around form is as follows. A sheet of a suitable plastics material is subjected to the usual cross-linking (by chemical means or by radiation) and heating/cooling operations, but the expansion is a two part process. The sheet is longitudinally expanded as a whole, and the part which is to become the second portion is further expanded. This further expansion increases in extent throughout the width of the second portion in a direction away from the first portion. The differential expansion of the second portion allows the second portion to splay out to form a collar which can overly a hole in the main conduit. It is to be understood that the expansion of the hole and the further expansion need not be done sequentially, but may be part of the same process. After this expansion, and before the material is closed to form a tube, the second portion preferably will have a generally pleated configuration. The size of such pleats can vary over a wide range, but a typical size for one particular application could be regarded as 50 mm pitch and 50 mm depth. However, the precise configuration will depend on the method employed in the expansion. A continuous in line process can be employed, in which convolutions are produced in the second portion simply by pressing.

Where the sheet material is to be in the form of a closed tube, it may be made as above and then welded closed, or it may be moulded as a tube, and then radially expanded in a way corresponding to that described above.

The extent of expansion, and therefore the recovery ratio, is not critical, but for some material we prefer that the greatest expansion of the second portion is by a factor of 2—3. Any suitable polymeric material having elastic memory imparted thereto can be used in the present invention, for example polyolefins such as polyethylene or polypropylene or copolymers of these polymers with other ethylenically unsaturated monomers, other polymers that are suitable include PVC, polyvinylidene fluoride, polytetrafluoroethylene and polyvinylidenefluoride/hexafluoropropylene. Additional features can also be provided such as a coating of thermochromic paint to indicate when sufficient heat has been applied for recovery. Other additives often used in conjunction with polymeric material in this context include filler, pigments, antioxidants and flame retardants.

This aspect of the invention is particularly applicable for use in conjunction with large conduits, for example those having a diameter or from 1/2—3 m but larger or smaller branch-offs can be made. In general, the branch-off conduit will of course, have a smaller diameter than the main conduit, although the relative sizes of the two conduits is not critical. We expect the invention to be particularly applicable to conduits for carrying oil and gas, but it can also be used at joints in conduits carrying supply cables.

The invention can also provide a pipe bend. In this case the sheet material will be provided with a region of differential expansion which increases in extent of expansion and then decreases again across the sheet. The sheet would then be wrapped around to form a closed tube which would naturally form a bend; the region of maximum expansion would become the outer radius and the regions of minimum expansion (now joined) would become the inner radius. The whole of the sheet is preferably expanded uniformly (in one direction), and the region of differential expansion superimposed, leaving two edge strips not expanded differentially. These edge strips would be used to form the inner radius of the bend, and could be provided with closure rails, or other closure means. Alternatively, the sheet material could be formed as a tube and then expanded.

In the case of the tape, we prefer that the polymeric strip is heat-shrinkable along its length without substantial change in its width, by which we mean that on recovery in the absence of external deforming forces, the width of the tape shall decrease by less than 25%, preferably by less than 10%, and most preferably by less than 5%, and shall increase by less than 10%, and preferably by less than 5%. The tape may have the features set out in claim 21.

To enhance the covering provided by the tape, it may be made of a material which is self-adhesive at its recovery temperature. Polymer mixtures which possess this property include, for example, those disclosed in US Patent No. 4,001,065.

An alternative method of enhancing the covering provided by the tape is for it to have a coating of adhesive, which will bond the tape to itself and to the substrate, on at least a part of one side. The adhesives most suitable for use with this invention are those which are heat-activatable. By a heat-activatable adhesive is meant an adhesive which is relatively non-tacky at ambient temperature, but which will become tacky on heating to its activation temperature, and will provide an adhesive bond on return to ambient temperature after activation. Such adhesives include, for example, hot-melt adhesives, which are especially suitable for this invention. These adhesives preferably remain high viscous at the recovery temperature of the tape, or may "milk off" and/or permit layers of the tape to slide with respect to one another. The need for a high adhesive viscosity is more important when the transition to be covered is steeper, and the risk of slippage of the tape layers thus greater. The adhesive may be cross-linked. Suitable adhesives include, for example, those disclosed in US Patent No. 4,018,733.

In addition, the tape of this invention may have a coating of a thermochromic paint on at least a part of one side; that side being the one which is not adhesive-coated, if an adhesive is present. The thermochromic paint coating is especially suitable for tape with an adhesive coating and the indicating temperature of the paint may be chosen so that it will indicate activation of the adhesive.

The invention will now be further described, by way of example, with reference to the accompanying drawings, in which:

Figure 1 shows a sheet of recoverable material before use;

Figures 2 and 3 show a branch-off formed using the sheet of Figure 1;

Figures 4—6 show how a double region of differential expansion can be used to form a pipe bend;

Figure 7 is an isometric view of the tape of the invention; and

Figures 8 and 9 show the tape covering a substrate with a transition, before and after recovery.

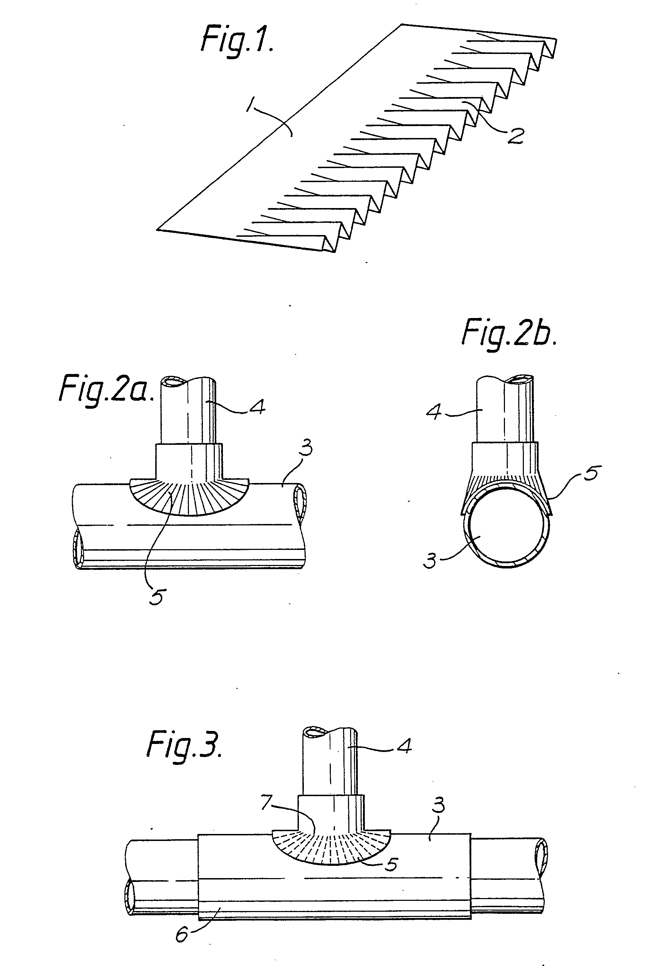

The sheet of recoverable material shown in Figure 1 has a first portion 1, which has been expanded to a certain extent, and a second portion 2 which has been expanded to a greater extent. The second portion 2 has a pleated configuration because it has been differentially expanded, the extent of expansion increasing in a direction away from the first portion. Although the pleats here are regular we intend to cover configurations which are irregular and which are produced by gentler folding or curving.

This differential expansion allows the second portion 2 to splay out to form a collar 5 which can overly a main conduit 3. This is shown in Figures 2a and 2b. In these figures the first portion 1 is used to secure a separate branch-off conduit 4, although the first portion 1 could itself extend a considerable distance thus forming an integral branch-off conduit.

The collar 5 can be secured to the main conduit 3 in many ways, one of which is illustrated in Figure 3. In this figure a recoverable wrap-around sleeve 6 is provided which has a hole 7 through which passes the first portion 1 of the sheet material. The wrap-around 6 is then secured in its closed configuration and then recovered. It is not critical whether the sheet material is recovered before, after or simultaneously with the wrap-around sleeve 6.

The sheet material can be used to cover irregular main conduits. Although the main conduit 3 is of constant cross-section, it may in some cases be stepped at the point where the branch-off occurs, due to the reduced volume that it has to carry after the branch-off.

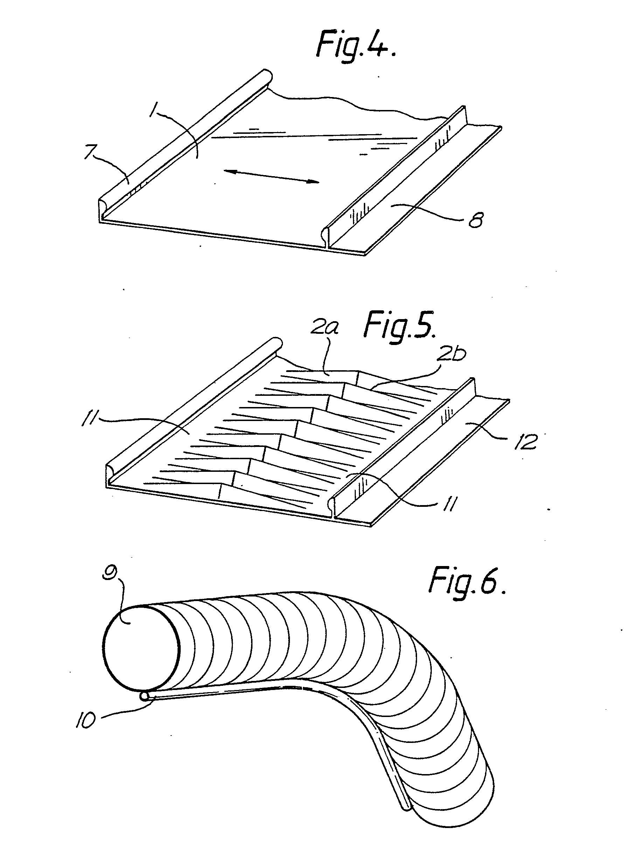

Figures 4—6 show the production of a pipe bend using a recoverable sheet 1 having a double region of differential expansion 2a, 2b. Firstly, the sheet 1 is uniformly expanded in the direction shown by the arrow in Figure 4. Then (or simultaneously) further expansion is carried out to produce two regions of pleats 2a and 2b, where the extent of expansion increases towards the centre. This could be reversed, so that maximum expansion occurred at the two edges, but this is not preferred. The sheet is then wrapped-around so that the rails 7 meet. A closure channel 10 or other means is then used to maintain the tubular shape 9. Recovery is then carried out. Preferably the outer regions 11 of the sheet are not subjected to the differential expansion. One of the rails 7 is off-set from an edge of the sheet to provide a flap 12 which will underly the rails when the tube 9 is formed. This flap 12 serves to enhance the join and to protect any substrate within the tube.

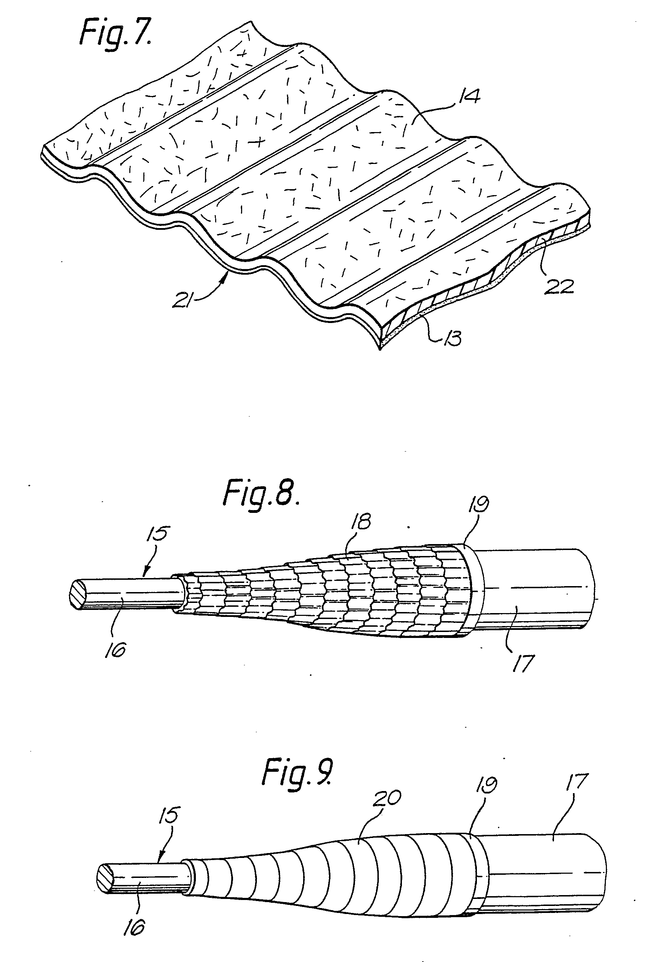

Figure 7 is an isometric view of an example of the tape of this invention. The tape shown generally at 21 comprises a polymeric strip 22, which has an adhesive coating 13 on one side and thermochromic paint 14 on the other. The depth of the pleats may be deeper (or shallower) than is shown in Figure 7, depending on the materials and width of the tape.

The tape of this invention may be conveniently prepared by extrusion, and, if the adhesive is a hot-melt, the adhesive may be co-extruded with the tape. In order to render the tape heat-shrinkable, the polymer strip is preferably cross-linked, which may conveniently be done by electron irradiation. Other cross-linking methods, such as γ-irradiation or chemical cross-linking, are also suitable.

After heating of the strip to above the softening point of the material of the strip and regardless of the method of expansion employed, the tape is stretched longitudinally while by generally about 25% to about 200% (1.25× to 3.0×), preferably about 50% to 200% (1.5× to 3.0×), and especially about 100% (2.0×). The stretched tape is then transversely pleated while hot by any suitable means, such as the use of corrugated rolls, to stretch it further by generally about 10% to about 150% of its stretched length (1.1× to 2.50×), preferably about 30% to about 100% (1.3× to 2.0×), and especially about 50% (1.5×). The pleated strip is cooled in the deformed condition.

Since it is not convenient for the pleating process longitudinally to strain the tape evenly, the average extent of expansion that may be introduced by pleating is limited to less than the ultimate expansion of the material; and those skilled in the art will have no difficulty, having regard to their own knowledge and the disclosure herein, in determining suitable pleating procedures.

The periodicity and shape of the pleats are to some extent determined by the properties of the material of the polymeric strip. To reduce the problem of uneven longitudinal strain, the pleats will generally be substantially sinusoidal and of regular periodicity, but such is not an essential feature of the invention. For the tape to be applied by hand during installation, tape having a higher bending stiffness will require deeper pleats than more flexible tape.

The pleats in the tape of this invention will preferably be such that the tape has a unit spring constant, defined as force per unit strain of the tape at room temperature, i.e. at about 23°C, of less than 50 kg, more preferably 1—20 kg, especially 2—10 kg. These values are for a hand-wrap tape, and a machine-wrap tape may have a higher constant, for example, up to 100 kg or more. The tape will preferably, by reason of changes in the configuration of the pleats, be capable of an extension of one edge relative to the other. This relative extension may be accomplished either by extension of one edge with the length of the other edge remaining constant, by contraction of one edge with the length of the other edge remaining constant, or by simultaneous extension of one edge and contraction of the other edge. On recovery when fixed at each end thereof and across the width thereof, the tape will preferably become substantially planar as a result of recovery of the pleats; and this planar tape will preferably, in the absence of restraining forces, be capable of at least a further 10% axial recovery.

While heat-shrinkable articles are generally heated to their recovery temperature by external heating means such as a gas torch or hot air gun, it is contemplated by this invention that the tape may also comprise integral heating means capable of producing the heat required for recovery. Such integral heating means may preferably be electrical heating means. For example, the polymeric strip may be made from a conductive polymer and electrodes attached so that the strip is self-heating. Alternatively, a conductive polymeric heating element capable of dimensional change (such as, for example, that described in US Patent No. 4,177,446) may be laminated to the polymeric strip. These examples are not intended to be exclusive, and the scope of this invention is not to be taken to be limited by them.

The width of the tape is preferably greater than about 1.5 cm in order to obtain the benefit of the pleats, and is more preferably between 5 and 30 cm, especially between about 5 and 15 cm. These widths are for a hand-wrap tape, and machine-wrap tape may be wider, for example, up to 1 m or more. Because a narrow tape will not require as great an extensibility on application or shrinkability on recovery as a wider tape to smoothly cover a substrate with a transition, the expansion ratio required may depend somewhat on the width of the tape. The thickness of the tape may depend on the material of the polymeric strip and adhesive, but preferably the strip will be less than about 1.5 mm thick after extension and pleating with the adhesive layer, if present, generally thinner than that.

A particular advantage of the tape of this invention is that, because extensibility is at least partially provided by the pleats rather than necessarily by the properties of the tape material itself, the tape may be made from materials or in thicknesses or widths which would not permit a smooth wrapping of an unpleated tape. For instance, a 6.5 cm wide tape suitable for covering a transition for 1 cm to 5 cm radius over a length of 20 cm requires an average extensibility of about 40%. To provide this in a flat tape which can be applied by hand would necessarily require that the tape be narrow and easily deformable and either be thin (e.g. electrical tape) or have a low tensile modulus (e.g. rubber strip). Neither of these tapes will display good resistance to environmental conditions (e.g. heat, stress, wear, chemical exposure) after installation. Because of the pleats, however, the tape of this invention may be made from materials in widths, etc., more appropriate to environmental conditions after installation and still provide a good covering.

This invention also provides a method of covering a substrate, especially a substrate with a transition, wherein the pleated tape is wrapped in an overlapping fashion about the substrate and the free end of the tape is secured to prevent unwrapping during recovery. The securing means may comprise, for example, an alligator clip, a toothed clip of the type used for "Ace" bandages, heat-resistant adhesive tape, or other suitable means. The tape is then heated with a gas torch, hot air gun, etc., or by integral heating means, to recover it tightly about the substrate and to activate the adhesive, if such is present. The correct temperature for recovery may be indicated by thermochromic paint placed on at least a portion of the side of the tape which is not adhesive coated.

Figures 8 and 9 illustrate the method of using the tape to cover a substrate with a transition. In Figure 8, a substrate shown generally at 15 with a transition from a smaller end 16 to a larger end 17 is wrapped with the tape 18 of this invention, starting at the end 16 of the transition. The free end of the tape is secured by heat-resistant adhesive tape 19. In Figure 9, the tape has been heated with a gas torch to effect recovery. The recovered tape 20 provides a smooth cover for the transition.

A tape according to this invention may be prepared by extruding a polymeric composition approximately 63% by weight ethylene-vinyl acetate copolymer (18% vinyl acetate), 18% thermal black, about 17% filler, about 1% antioxidants, and about 1% of an agent designed to promote electron-beam cross-linking, to give a strip of width 6.5 cm and thickness 1.0 mm. A hot-melt adhesive layer of 0.5 mm thickness, comprising primarily an ethylene-ethyl acrylate copolymer and a tackifier, was coextruded onto one side of the tape. The resulting tape was cross-linked by exposure to 20 Mrad of 1 Mev electrons, and was then stretched longitudinally approximately 100%. The expanded tape was then transversely pleated by the use of a corrugating press to afford approximately sinusoidal pleats of periodicity 15 mm and total depth 10 mm, which resulted in a further expansion for the tape by about 50%.

A sample of this tape was wrapped around a substrate, the external diameter of which had a transition from 2.5 cm to 10 cm, and the free end secured with an alligator clip. The tape was heated by a gas torch to above its recovery temperature, and contracted smoothly to cover and seal the joint. No pleats remained in the finished covering.

**Claims**

1. A recoverable polymeric sheet material for forming a conduit, which has been differentially expanded, the change in extent of expansion across its surface being accommodated by pleats which increase in depth or number in the direction of increasing expansion.

2. A recoverable sheet material according to Claim 1, for providing a sealed branch-off from a main conduit (3), comprising:

a first portion (1) which can define or enclose a branch-off conduit, and

a second portion (2) having been expanded differentially and which thus can splay out to form a collar around a hole in the main conduit.

3. A material according to Claim 1 or 2, in the form of a wrap-around closure member.

4. A material according to Claim 1 or 2, in the form of a tube.

5. A material according to any preceding Claim, which is heat recoverable.

6. A material according to Claim 2, for sealing a branch-off conduit to a main conduit, in which the first portion (1) can enclose the branch-off conduit (4).

7. A material according to Claim 2, in which the first portion (1) is or can form a branch-off conduit.

8. A material according to Claim 2, in which the second portion (2) is pleated.

9. A method of producing a material according to Claim 3, in which recoverability is induced into the material by a process which includes expanding longitudinally the whole of the material, and further expanding longitudinally the second portion (2), the extent of the further expansion increasing throughout the width of the second portion (2) in a direction away from the first portion.

10. A method according to Claim 9, in which the further expansion of the second portion (2) is produced by pressing the second portion (2) into a pleated configuration.

11. A method according to Claim 9, which is a continuous in-line method.

12. A method of providing a material according to Claim 4, in which recoverability is induced into the material by a process which includes expanding radially the whole of the tube, and further expanding radially the second portion (2), the extent of the further expansion increasing throughout the second portion (2) in a direction away from the first portion (1).

13. A method of forming a branch-off, in which a material according to Claim 2, is placed on a conduit (3) with the collar (5) around a hole (7) in the conduit (3), the collar (5) is secured to the conduit (3) and the material is recovered.

14. A method according to Claim 13, which comprises: securing the collar (5) to the conduit (3) by means of a wrap-around recoverable sleeve (6) having a hole therein, the wrap-around sleeve being wrapped around the conduit (3) with the first portion (1) passing through the hole; securing the sleeve (6) in the wrapped configuration; and recovering the sleeve (6).

15. A method according to Claim 13, which comprises: securing the collar (5) to the conduit (3) by means of at least two adhesive patches, one either side of the branch-off conduit (4).

16. A method according to Claim 13, which comprises: securing the collar (5) to the conduit (3) by means of two recoverable sleeves around the main conduit (3), one on either side of the branch-off conduit (4) overlapping the collar (5); and recovering the two sleeves.

17. A branch-off comprising a main conduit (3) and a branch-off conduit (4) secured by a method according to any of Claims 12—15.

18. A recoverable sheet material according to Claim 1, for providing a pipe bend, comprising:

a first portion (2a) which has been differentially expanded, the extent of expansion increasing in a first direction; and

a second portion (2b) adjacent the first portion (2a) which has been differentially expanded, the extent of expansion increasing in the opposite direction.

19. A material according to Claim 18, in which the two directions of increasing expansion are towards one another, and in which a closure rail (7) is provided adjacent each portion (2a, 2b), on the side of that portion remote from the other portion.

20. A corrugated tape (21) comprising a recoverable polymeric strip (22) having generally transverse pleats forming the corrugations.

21. A tape (21) according to Claim 20 comprising a heat-shrinkable polymeric strip (22); said pleats having a stable configuration when the tape is at 23°C and is not subject to deforming forces; said tape

(1) when deformed axially at room temperature by a deforming force of 5 kg applied uniformly across its width, changing in length by at least 10% as a result of changes in the configurations of the pleats;

(2) when fixed at each end thereof but at one edge only and stretched axially along the other edge only, increasing in length along said other edge as a result of changes in the configuration of the pleats; and

(3) when fixed at each end thereof and across the width thereof and heated to its recovery temperature, becoming a substantially planar tape as a result of the pleats, said substantially planar tape, when heated to its recovery temperature in the absence of restraining forces, shrinking axially by at least 10%.

22. A tape (21) according to Claim 20 or 21, in which at least a portion of one side of the polymeric strip (22) has a coating of adhesive (13).

23. A tape (21) according to Claim 22, in which the adhesive (13) is a heat-activatable adhesive.

24. A tape (21) according to Claim 20 or 21, in which the material comprising the polymeric strip is self-adhesive at the recovery temperature of the tape.

25. A tape (21) according to any of Claims 20—24, which additionally comprises a coating of thermochromic paint (14) on at least a portion of one side of the polymeric strip (22).

26. A tape (21) according to Claim 22, in which at least a portion of that side of the strip which does not have a coating of adhesive (13) has a coating of a thermochromic paint (14).

27. A tape (21) according to any of Claims 20—26, which additionally comprises integral heating means.

28. A tape (21) according to Claim 27, wherein the integral heating means are electrical heating means.

29. A tape (21) according to any of Claims 20—28, wherein the width of the tape is between 5 and 30 centimeters.

30. A tape (21) according to any of Claims 20—29, which is shrinkable along its length without substantial change in its width.

31. A method of manufacture of a tape (21) according to any of Claims 20—30, which comprises:

(a) extruding a polymeric strip (22);

(b) cross-linking said strip (22);

(c) heating said strip (22) to above the softening point of the material of said strip (22);

(d) longitudinally stretching said strip (22) while hot;

(e) pleating said stretched strip (22) to stretch it further longitudinally while hot; and

(f) cooling said pleated strip (22) in the deformed condition.

32. A method according to Claim 31, which additionally comprises coating at least a portion of one side of the polymeric strip (22) with an adhesive (13).

33. A method according to Claim 31 or 32, wherein the longitudinal stretching of step (d) provides an extension of from 50% to 200% and the pleating of step (e) provides a further extension of from 30% to 100% of the stretched length.

34. A method of covering a substrate (15), which comprises:

(a) wrapping around the substrate (15) a tape (21) according to any of Claims 20—30 in overlapping relation;

(b) securing the free end of said tape (21); and

(c) heating said tape (21) above its recovery temperature to cause it to shrink and to cover the substrate.

35. A method according to Claim 34, which comprises:

(a) wrapping around the substrate (15) a tape (21) according to Claim 22, in overlapping relation with the adhesive-coated side (13) towards the substrate (15);

(b) securing the free end of said tape (21); and

(c) heating said tape (21) above its recovery temperature and the activation temperature of the adhesive (13) to cause it to shrink and cover the substrate (15) and to activate the adhesive (13) so that it bonds the tape (21) to itself and to the substrate (15).

## Patentansprüche

1. Rückstellfähiges polymeres Plattenmaterial zur Bildung einer Leitung, das differential expandiert worden ist, wobei die Veränderung im Ausmaß der Expansion quer zu seiner Oberfläche durch Falten ausgeglichen werden, die in Tiefe oder Zahl in Richtung zunehmender Aufweitung zunehmen.

2. Rückstellfähiges Plattenmaterial nach Anspruch 1 für die Bereitstellung einer abgedichteten Abzweigung von einer Hauptleitung (3) enthaltend:

einen ersten Bereich (1), der eine Verzweigung bilden oder einschließen kann und

einen zweiten Bereich (2), der differential expandiert worden ist und der dadurch ausspreizbar ist und einen Kragen um ein Loch in der Hauptleitung bildet.

3. Material nach Ansprüchen 1 oder 2 in Form eines Einschlagverschlußteils.

4. Material nach Anspruch 1 oder 2 in Form einer Röhre.

5. Material nach einem der vorhergehenden Ansprüche, welches wärmerückstellfähig ist.

6. Material nach Anspruch 2 zum Abdichten einer Verzweigungsleitung zu einer Hauptleitung, in der der erste Bereich (1) die Verzweigungsleitung (4) einschließen kann.

7. Material nach Anspruch 2, in dem der erste Bereich (1) eine Abzweigleitung ist oder bilden kann.

8. Material nach Anspruch 2, in dem der zweite Bereich (2) gefaltet ist.

9. Verfahren zur Herstellung eines Materials nach Anspruch 3, in dem dem Material durch einen Prozess, der enthält: longitudinale Aufweitung des Gesamtmaterials und weitere longitudinale Aufweitung des 2, Bereichs (2) Rückstellfähigkeit induziert ist, wobei das Ausmaß der weiteren Aufweitung über die Breite des 2, Bereichs (2) in einer Richtung weg vom ersten Bereich zunimmt.

10. Verfahren nach Anspruch 9, in dem die weitere Aufweitung des zweiten Bereichs (2) durch Pressen des 2. Bereichs (2) in gefaltete Konfiguration hervorgerufen wird.

11. Verfahren nach Anspruch 9, welches eine kontinuierliche Fließbandmethode ist.

12. Verfahren, ein Material nach Anspruch 4 bereitzustellen, in dem die Rückstellfähigkeit dem Material durch einen Prozess induziert wird, welcher enthält; das radiale Aufweiten des gesamten Rohrs und das weitere radiale Aufweiten des 2. Bereichs (2), wobei das Ausmaß der weiteren Aufweitung durch den 2. Bereich (2) in einer Richtung weg vom 1. Bereich (1) zunimmt.

13. Verfahren zur Bildung einer Abzweigung, in der ein Material nach Anspruch 2 auf einer Leitung (3) angebracht wird, wobei der Kragen (5) um ein Loch (7) in der Leitung (3) liegt und der Kragen (5) an der Leitung (3) befestigt ist und das Material rückgestellt wird.

14. Verfahren nach Anspruch 13, enthaltend: Befestigung des Kragens (5) an der Leitung (3) durch eine wärmerückstellfähige Einschlaghülse (6), die ein Loch hat, wobei die Einschlaghülse um die Leitung (3) geschlagen ist, wobei der Erstbereich (1) durch das Loch geht; Befestigung der Hülse (6) in eingeschlagener Konfiguration und Rückstellung der Hülse (6).

15. Verfahren nach Anspruch 13, enthaltend: Befestigung eines Kragens (5) an der Leitung (3) durch wenigstens zwei Klebflecke, von denen sich an jeder Seite der Verzweigungsleitung (4) wenigstens einer befindet.

16. Verfahrend nach Anspruch 13, enthaltend: Befestigung des Kragens (5) an der Leitung (3) durch zwei rückstellfähige Hülsen um die Hauptleitung (3), eine auf jeder Seite der Verzweigungsleitung (4), den Kragen (5) überlappend; und Rückstellen der zwei Hülsen.

17. Verzweigung enthaltend eine Hauptleitung (3) und eine Verzweigungsleitung (4) befestigt nach einer Methode nach einem der Ansprüche 12 bis 15.

18. Rückstellfähiges Plattenmaterial nach Anspruch 1 zur Herstellung einer Rohrkrümmung, enthaltend: einen ersten Bereich (2a), der differential expandiert wurde, wobei das Ausmaß der Expansion in einer ersten Richtung zunimmt und einem zweiten Bereich (2b), der an den ersten Bereich (2a) angrenzt und der differential expandiert worden ist, wobei das Ausmaß der Expansion in umgekehrte Richtung zunimmt.

19. Material nach Anspruch 18, in dem zwei Richtungen zunehmender Expansion aufeinander zu gerichtet sind und in dem eine Verschlußschiene (7) angrenzend an jeden Bereich (2a, 2b) auf der Seite des Bereichs, die entfernt vom anderen Bereich liegt, vorgesehen ist.

20. Gewelltes Band (21) enthaltend einen rückstellfähigen polymeren Streifen (22) mit im allgemeinen transversalen Falten, die die Wellungen formen.

21. Ein Band (21) nach Anspruch 20, enthaltend einen wärmeschrumpffähigen polymeren Streifen (22), wobei besagte Falten eine stabile Konfiguration haben, wenn das Band bei 23°C ist und keinen Deformationskräften unterliegt; wobei besagtes Band

(1) wenn es axial bei Raumtemperatur durch eine deformierende Kraft von 5 kg deformiert wird, die gleichmäßig entlang seiner Breite angewendet wird, sich in der Länge um wenigstens 10 % als Resultat der Veränderungen in der Konfiguration der Falten ändert;

(2) wenn es an jedem Ende, aber nur an einer Kante davon, fixiert und lediglich axial enlang der anderen Kante gestreckt wird, in der Länge entlang besagter anderer Kante als Resultat der Veränderungen in Konfiguration der Falten zunimmt und

(3) wenn es an jedem Ende und über die Breite fixiert und auf seine Rückstelltemperatur erhitzt ist, bedingt durch die Falten ein im wesentlichen planares Band wird, wobei das besagte, im wesentlichen planare Band, wenn es auf seine Rückstelltemperatur erhitzt wird, in Abwesenheit von Rückhaltekräften axial um wenigstens 10 % schrumpft.

22. Band (21) nach Ansprüchen 20 oder 21, in dem wenigstens ein Bereich einer Seite des polymeren Streifens (22) eine Deckschicht aus Klebestoff (13) hat.

23. Band (21) nach Anspruch 22, in dem der Klebstoff (13) ein wärmeaktivierbarer Klebstoff ist.

24. Band (21) nach Ansprüchen 20 oder 21, in dem das Material enthaltend den polymeren Streifen selbstklebend bei Rückstelltemperatur des Bandes ist.

25. Band (21) nach einem der Ansprüche 20 bis 24, zusätzlich enthaltend eine Deckschicht aus thermochromer Farbe (14) auf wenigstens einem Bereich einer Seite des polymeren Streifens (22).

26. Band (21) nach Anspruch 22, in dem wenigstens ein Bereich der Seite des Streifens, die keine Deckschicht aus Klebstoff (13) hat, eine Deckschicht aus thermochromer Farbe (14) hat.

27. Band (21) nach einem der Ansprüche 20 bis 26, der zusätzlich integrale Heizmittel enthält.

28. Band (21) nach Anspruch 27, worin die integralen Heizmittel elektrische Heizmittel sind.

29. Band (21) nach einem der Ansprüche 20 bis 28, worin die Breite des Bandes zwischen 5 und 30 cm liegt.

30. Band (21) nach einem der Ansprüche 20 bis 29, welches entlang seiner Länge ohne wesentliche Veränderung in seiner Breite schrumpffähig ist.

31. Verfahren zur Herstellung eines Bandes (21) nach einem der Ansprüche 20 bis 30 enthaltend:

(a) Extrudieren eines polymeren Streifens (22);

(b) Vernetzen besagten Streifens (22);

(c) Erhitzen besagten Streifens (22) auf über den Erweichungspunkt des Materials besagten Streifens (22);

(d) longitudinales Strecken besagten Streifens (22) während er heiß ist;

(e) Falten besagten gestreckten Streifens (22), um ihn, während er heiß ist, weiter longitudinal zu strecken und

(f) Kühlung besagten gefalteten Streifens (22) im deformierten Zustand.

32. Verfahren nach Anspruch 31, welches zusätzlich enthält, dass Beschichten wenigstens eines Teils einer Seite des polymeren Streifens (22) mit Klebstoff (13).

33. Verfahren nach Ansprüchen 31 oder 32, worin das longitudinale Strecken des Schritts (d) zu einer Streckung von 50 % bis 200 % führt und das Falten des Schrittes (e) eine weitere Streckung von 30% bis 100 % der gestreckten Länge bewirkt.

34. Verfahren zur Umhüllung eines Substrats (15), welches enthält:

(a) Wickeln eines Bandes (21) um das Substrat (15) nach einem der Ansprüche 20 bis 30 in überlappender Beziehung;

(b) Befestigung des freien Endes besagten Bandes (21) und

(c) Erhitzen besagten Bandes (21) über seine Rückstelltemperatur, um es zum Schrumpfen und zum Umhüllen des Substrats zu bringen.

35. Verfahren nach Anspruch 34, enthaltend:

(a) Wickeln des Bandes (21) um das Substrat (15) nach Anspruch 22 in überlappender Beziehung mit der klebstoffbeschichteten Seite (13) zum Substrat (15);

(b) Befestigung des freien Endes besagten Bandes (21); und

(c) Erhitzen besagten Bandes (21) über seine Rückstelltemperatur und die Aktivierungstemperatur des Klebstoffs (13), um es zum Schrumpfen und zum Umhüllen des Substrats (15) zu bringen und um den Kleber (13) zu aktivieren, so dass er das Band (21) mit sich selbst und mit dem Substrat (15) bindet.

## Revendications

1. Une matière en feuille à reprise de forme pour former un conduit, qui a été dilatée de manière différentielle, le degré dont sa dilatation varie d'un bout à l'autre de sa surface étant compensé par des plis dont la profondeur ou le nombre s'accroît dans la direction de dilatation croissante.

2. Une matière en feuille à reprise de forme selon la revendication 1 pour réaliser un branchement étanche sur un conduit principal (3) comprenant: une première partie (1) qui peut former ou enfermer un conduit d'embranchement, et

une seconde partie (2) qui a été dilatée différentiellement et qui peut ainsi s'épanouir pour former un collier autour d'un trou formé dans le conduit principal.

3. Une matière selon la revendication 1 ou 2 sous la forme d'un organe de fermeture enveloppable.

4. Une matière selon la revendication 1 ou 2 sous la forme d'un tube.

5. Une matière selon une quelconque revendication précédente qui est à reprise thermique de sa forme.

6. Une matière selon la revendication 2 pour assurer l'étanchéité du raccordement d'un conduit d'embranchement sur un conduit principal dans laquelle la première partie (1) peut entourer le conduit d'embranchement.

7. Une matière selon la revendication 2, dans laquelle la première partie (1) est ou peut former un conduit d'embranchement.

8. Une matière selon la revendication 2 dans laquelle la seconde partie (2) est plissée.

9. Un procédé de fabrication d'une matière selon la revendication 3 suivant lequel la capacité de reprise est induite dans la matière au moyen d'un processus qui consiste à dilater longitudinalement la totalité de la matière puis à dilater à nouveau longitudinalement la seconde partie (2), l'importance de cette dilatation supplémentaire s'accroissant sur toute la largeur de la seconde partie dans une direction orientée en éloignement de la première partie.

10. Un procédé selon la revendication 9, dans lequel la dilatation supplémentaire est produite en formant à la presse la seconde partie sous une configuration plissée.

11. Un procédé selon la revendication 9 qui est un procédé séquentiel continu.

12. Un procédé de fabrication d'une matière selon la revendication 4 suivant lequel la capacité de reprise est induite dans la matière au moyen d'un processus qui consiste à dilater radialement la totalité du tube puis à dilater à nouveau radialement la seconde partie (2), l'importance de cette dilatation supplémentaire s'accroissant d'un côté à l'autre de la seconde partie dans une direction orientée en éloignement de la première partie (1).

13. Un procédé pour former un branchement, suivant lequel une matière selon la revendication 2 est placée sur un conduit (3) avec le collier (5) autour d'un trou (7) formé dans le conduit (3), le collier (5) est fixé conduit (3) et la reprise de la matière est provoquée.

14. Un procédé selon la revendication 13 qui comprend les étapes qui consistent: à fixer le collier (5) au conduit (3) au moyen d'un manchon enveloppable (6) à reprise de forme dans lequel est formé un trou, le manchon enveloppable étant enveloppé autour du conduit (3) avec la première partie (1) enfilée dans le trou, à assujettir le manchon dans la configuration enveloppante et à provoquer la reprise du manchon (6).

15. Un procédé selon la revendication 13 qui comprend les étapes qui consistent: à fixer le collier (5) au conduit (3) au moyen d'au moins deux pièces rapportées adhésives disposées de part et d'autre du conduit d'embranchement (4).

16. Un procédé selon la revendication 13 qui comprend les étapes qui consistent: à fixer le collier (5) au conduit (3) au moyen de deux manchons à reprise de forme disposés autour du conduit principal (3), un de chaque côté du conduit d'embranchement (4) recouvrant le collier (5) et à provoquer la reprise des deux manchons.

17. Un branchement comprenant un conduit principal (3) et un conduit d'embranchement fixés entre eux par un procédé selon une quelconque des revendications 12 à 15.

18. Une matière en feuille à reprise de forme selon la revendication 1 pour former une coude de tuyauterie, comprenant:

une première partie (2a) qui a été dilatée de manière différentielle, l'importance de la dilatation s'accroissant dans une première direction; et

une seconde partie (2b) adjacente à la première partie (2a) qui a été dilatée de manière différentielle, l'importance de la dilatation s'accroissant dans la direction opposée.

19. Une matière selon la revendication 18 dans laquelle les deux directions de dilatation sont orientées l'une vers l'autre et dans laquelle une barrette de fermeture (7) est formée au voisinage de chaque partie (2a, 2b), du côté de cette partie éloignée de l'autre partie.

20. Un ruban ondulé (21) comprenant une bande (22) de matière polymère à reprise de forme ayant des plis dans l'ensemble transversaux formant les ondulations.

21. Un ruban (21) selon la revendication 20 comprenant une bande (22) de matière polymère thermo-rétrécissable, lesdits plis ayant une configuration stable lorsque le ruban est à 23°C et n'est soumis à aucune force de déformation; ledit ruban:

(1) lorsqu'il est déformé axialement à la température ambiante par une force de déformation de 5 kg appliquée uniformément sur toute sa largeur changeant d'au moins 10% de longueur par suite de changements dans la configuration des plis;

(2) lorsqu'il est assujetti à chacune de ses extrémités mais seulement sur un bord et étiré axialement uniquement le long de l'autre bord ayant sa longueur qui s'accroît suivant ledit autre bord par suite de changements dans la configuration des plis; et

(3) lorsqu'il est assujetti à chacune de ses extrémités et sur toute sa largeur et chauffé à température de reprise devenant un ruban sensiblement plan du fait de la présence des plis, ledit ruban sensiblement plan, lorsqu'il est chauffé à sa température de reprise, en l'absence de forces de retenue, rétrécissant axialement d'au moins 10%.

22. Un ruban (21) selon la revendication 20 ou 21 dans lequel au moins une partie d'une face de la bande (22) de matière polymère porte un revêtement d'adhésif (13).

23. Un ruban (21) selon la revendication 22 dans lequel l'adhésif (13) est un adhésif rendu actif par la chaleur.

24. Un ruban (21) selon la revendication 20 ou 21 dans lequel la matière qui constitue la bande de matière polymère est auto-adhésive à la température de reprise du ruban.

25. Un ruban (21) selon l'une quelconque des revendications 20 à 24 qui comprend, en outre, un revêtement de peinture thermochromique (14) sur au moins une partie d'une face de la bande (22) de matière polymère.

26. Un ruban (21) selon la revendication 22 dans lequel au moins une partie de la face de la bande qui ne comporte pas de revêtement d'adhésif (13) est munie d'un revêtement d'une peinture thermochromique (14).

27. Un ruban (21) selon l'une quelconque des revendications 20 à 26 qui comprend, en outre, des moyens de chauffage qui en font partie intégrante.

28. Un ruban (21) selon la revendication 27 dans lequel les moyens de chauffage intégrés sont des moyens de chauffage électriques.

29. Un ruban (21) selon l'une quelconque des revendications 20 à 28, dans lequel la largeur du ruban est comprise entre 5 et 30 centimètres.

30. Un ruban (21) selon l'une quelconque des revendications 20 à 29 qui est susceptible de rétrécir dans le sens de sa longueur sans présenter de changements importants de largeur.

31. Un procédé de fabrication d'un ruban (21) selon l'une quelconque des revendications 20 à 30, qui comprend les étapes qui consistent:

(a) à extruder und bande (22) de matière polymère;

(b) à réticuler ladite bande (22);

(c) à chauffer ladite bande (22) à une température supérieure au point de ramollissement de la matière de ladite bande (22);

(d) à étirer longitudinalement ladite bande (22) pendant qu'elle est chaude;

(e) à plisser ladite bande étirée (22) pour l'étirer à nouveau longitudinalement pendant qu'elle est chaude; et

(f) à refroidir ladite bande plissée (22) dans la condition déformée.

32. Un procédé selon la revendication 31 qui comprend, en outre, l'étape qui consiste à revêtir au moins une partie d'une face de la bande (22) de matière polymère d'un adhésif.

33. Un procédé selon la revendication 31 ou 32, dans lequel l'étirage longitudinal de l'étape (d) produit un allongement compris entre 50% et 200% et le plissage de l'étape (e) produit un allongement supplémentaire compris entre 30% et 100% de la longueur étirée.

34. Un procédé de revêtement d'un substrat (15) qui comprend les étapes qui consistent:

(a) à enrouler autour du substrat (15) un ruban (21) selon une quelconque des revendications 20 à 30 dans une disposition avec recouvrement;

(b) à assujettir l'extrémité libre dudit ruban (21); et

(c) à chauffer ledit ruban (21) à une température supérieure à sa température de reprise pour le faire rétrécir et recouvrir le substrat.

35. Un procédé selon la revendication 34 qui comprend les étapes qui consistent:

(a) à enrouler autour du substrat (15) un ruban (21) selon la revendication 22, dans une disposition avec recouvrement, avec la face (13) recouverte d'adhésif dirigée vers le substrat (15);

(b) à assujettir l'extrémité libre dudit ruban (21); et

(c) à chauffer ledit ruban à une température supérieure à sa température de reprise pour le faire rétrécir et recouvrir le substrat (15) et pour rendre l'adhésif (13) actif de sorte qu'il colle le ruban (21) à lui-même et au substrat (15).

Fig.1.

Fig.2a.

Fig.2b.

Fig.3.

# Fig.4.

# Fig.5.

# Fig.6.

Fig. 7.

*14*

*21*

*22*

*13*

Fig. 8.

*15*

*18*

*19*

*16*

*17*

Fig. 9.

*15*

*20*

*19*

*17*

*16*